# EUROPÄISCHE PATENTSCHRIFT

(11) **EP 3 140 882 B1**
(45) Veröffentlichungstag und Bekanntmachung des Hinweises auf die Patenterteilung: **17.06.2020**
(21) Anmeldenummer: 15707159.8
(22) Anmeldetag: 03.03.2015
(51) Int. Cl.: H01Q 21/06, H01Q 13/06, H01Q 21/28, H01Q 21/30, H01Q 1/32, G01S 13/02, G01S 13/931

(54) **ANTENNENVORRICHTUNG FÜR EIN FAHRZEUG**
ANTENNA DEVICE FOR A VEHICLE
DISPOSITIF D'ANTENNE POUR VÉHICULE

(30) Priorität: 06.05.2014 DE 102014208389
(43) Veröffentlichungstag der Anmeldung: 15.03.2017
(73) Patentinhaber: Robert Bosch GmbH, 70442 Stuttgart (DE)
(72) Erfinder: HIMMELSTOSS, Armin, 71554 Weissach Im Tal (DE)
(86) Internationale Anmeldenummer: PCT/EP2015/054414
(87) Internationale Veröffentlichungsnummer: WO 2015/169469

(56) Entgegenhaltungen:
- EP-A2- 0 570 863
- WO-A1-2009/093779
- DE-A1-102012 109 106
- JP-A- 2004 112 700
- US-A- 5 657 024
- US-A1- 2007 069 966
- US-A1- 2007 139 287
- US-A1- 2013 120 205
- US-B1- 6 208 313
- US-B1- 6 297 774

## Beschreibung

Die Erfindung betrifft eine Antennenvorrichtung für ein Fahrzeug.

### Stand der Technik

Die Offenlegungsschrift DE 10 2012 109 106 A1 zeigt eine Planarantenne mit verschachtelter Anordnung von Sendearray und Empfangsarray.

Die Offenlegungsschrift WO 2009/093779 A1 zeigt eine Wellenleiter-Antenne.

Automotive Radarsysteme strahlen in der Regel elektromagnetische Wellen aus einer planaren Erreger-Zeile oder Ebene ab. Nachteilig an diesen Systemen ist insbesondere, dass aus der Ebene heraus lediglich ein theoretisch maximaler Abstrahlwinkel von 180° möglich ist. Üblicherweise ist in der Praxis damit aber ein Auswertebereich von je maximal ± 50° erreichbar.

### Offenbarung der Erfindung

Die der Erfindung zugrunde liegende Aufgabe kann daher darin gesehen werden, eine verbesserte Antennenvorrichtung für ein Fahrzeug bereitzustellen, die die bekannten Nachteile überwindet und einen Abstrahlwinkel von mehr als 180° ermöglicht.

Diese Aufgabe wird mittels des Gegenstands nach Anspruch 1 gelöst. Vorteilhafte Ausgestaltungen der Erfindung sind Gegenstand von jeweils abhängigen Unteransprüchen.

Nach einem Aspekt wird eine Antennenvorrichtung für ein Fahrzeug bereitgestellt, aufweisend:
- eine Erzeugungseinrichtung zum Erzeugen elektromagnetischer Wellen,
- ein Hohlleitersystem zum Übertragen von elektromagnetischen Wellen, wobei
- das Hohlleitersystem mehrere Hohlleiteranordnungen umfasst, wobei
- die Hohlleiteranordnungen jeweils einen Eingang zum Einspeisen der erzeugten elektromagnetischen Wellen aufweisen, wobei
- die Hohlleiteranordnungen jeweils mehrere mit dem Eingang verbundene Ausgänge zum Auskoppeln der in den jeweiligen Eingang eingespeisten elektromagnetischen Wellen aufweisen,
- wobei die jeweiligen mehreren Ausgänge mit Öffnungen in einer Oberfläche verbunden sind, aus welchen die elektromagnetischen Wellen abstrahlen können,
- so dass die Oberfläche mehrere Bereiche aufweist, dessen jeweilige Öffnungen mittels einer eigenen Hohlleiteranordnung mit einem eigenen Eingang verbunden sind,
- wobei zumindest einige der mehreren Bereiche als zueinander winklig angeordnete Ebenen gebildet sind.

Nach einem Aspekt wird ein Fahrzeug bereitgestellt, welches eine oder mehrere Antennenvorrichtungen umfasst.

Es wird insbesondere der technische Vorteil bewirkt, dass die Oberfläche aufgrund der Öffnungen, durch welche die elektromagnetische Wellen abstrahlen, als eine Antenne wirkt oder eines solche bildet. Die so gebildete Antenne weist insbesondere eine Antennenkeule auf. Es sind nun beliebige Oberflächenformen möglich, von welchen die elektromagnetische Wellen abstrahlen. Die Beschränkung des Standes der Technik auf eine planare Erregerzeile kann somit in vorteilhafter Weise überwunden werden. Denn nun sind Antennen möglich, die einen Abstrahlbereich von größer als 180° Grad aufweisen, indem einfach die Oberfläche mit ihren Öffnungen entsprechend geformt ist. Da aus den Öffnungen die elektromagnetischen Wellen abstrahlen, kann die Oberfläche auch als eine Abstrahloberfläche bezeichnet werden. Somit kann diese Abstrahloberfläche in beliebig geformten Einbauräumen eingebaut werden, wenn eine Form der Oberfläche entsprechend der Form des Einbauraums gewählt wird. Aufgrund der flexiblen Formgebung der abstrahlenden Oberfläche, die als Antenne wirkt oder eine solche bildet, kann eine Anpassung an die Kontur der Einbauposition erreicht werden. Vorteilhaft wirkt hier insbesondere eine geometrisch nähere Anbindung an die erste/nächste zu durchdringende (durchdringend bezogen auf die elektromagnetischen Wellen) Ebene (zum Beispiel: Stoßfänger des Fahrzeugs). Damit lassen sich in vorteilhafter Weise unerwünschte Reflexionen zwischen dem Abstrahlbereich der Antenne oder der Oberfläche und Karosserieteilen minimieren.

Durch das Vorsehen von mehreren Hohlleiteranordnungen wird insbesondere des Weiteren der technische Vorteil bewirkt, dass die Oberfläche mehrere Bereiche aufweist, die unabhängig voneinander elektromagnetische Wellen abstrahlen können. Denn jedem Bereich ist ein eigener Eingang zugeordnet. Jeder Bereich bildet somit eine Antenne mit eigener Antennenkeule oder wirkt als eine solche Antenne. Es sind somit in vorteilhafter Weise mehrere Antennen in einer Oberfläche vereint. Die Oberfläche weist vorzugsweise mehrere Antennen auf. Jeder dieser Bereiche kann somit eine eigene Funktion übernehmen, um unterschiedliche Antennencharakteristiken zu erzeugen. So können bei Radarwellen entsprechende Bereiche so gebildet sein, dass ein Nahbereich (zum Beispiel 10 cm bis 3 Meter) erfasst wird. Insbesondere kann ein Fernbereich (zum Beispiel mehr als 10 m) mittels der Radarstrahlung oder der Radarwellen ausgeleuchtet werden. Im Nahbereich können beispielsweise Parklücken ausgetastet werden. Der Fernbereich kann insbesondere im Zusammenhang mit einer automatischen Geschwindigkeitsregeleinrichtung verwendet werden. Eine solche Geschwindigkeitsregeleinrichtung wird im Englischen üblicherweise als ACC, Adaptive Cruise Control, bezeichnet.

Somit können also mehrere Bereiche der Oberfläche unterschiedliche Funktionen übernehmen. Solche Funktionen können beispielsweise folgende Funktionen: Nahbereichsradar, Mittelbereichsradar, Fernbereichsradar, Einparkhilfe, Parklückenvermessung, Fußgängerschutz und Spurwechselassistent.

Ebenfalls können durch unmittelbare Anbringung oder Anordnung - an die erste/nächste zu durchdringende Ebene - die Verzerrungen der Antennencharakteristiken minimiert werden. Auch durch eine Formgebung des Abstrahlbereichs/Antenne und auch durch das Antennendesign (Signalverteilung, Amplituden und Phasenbelegung bezogen auf die Belegung der Abstrahlfläche) können Verzerrungen der Antennencharakteristiken vermieden werden.

Die Oberfläche ist nach einer Ausführungsform eine Oberfläche eines Bauteils, beispielsweise eines Gehäuses.

Nach einer Ausführungsform können elektromagnetische Wellen im THz- bis GHz-Bereich vorgesehen sein. Insbesondere kann ein Bereich von 1 GHz bis 24 GHz vorgesehen sein. Das heißt insbesondere, dass die Erzeugungseinrichtung ausgebildet ist, solche elektromagnetischen Wellen in den vorstehend genannten Frequenzbereichen zu erzeugen. Die elektromagnetischen Wellen sind beispielsweise Radarwellen.

Ein Hohlleitersystem oder eine Hohlleiteranordnung im Sinne der vorliegenden Erfindung umfasst insbesondere einen oder mehrere Hohlleiter, die miteinander verbunden sind. Die Hohlleiter können insbesondere analog zu einem Kanalnetz einer Kanalisation aufgebaut sein. So umfasst die Hohlleiteranordnung beispielsweise einen oder mehrere Abzweigungen, von denen Hohlleiter abzweigen. Insbesondere umfasst die Hohlleiteranordnung einen Knoten oder mehrere Knoten, in welchen mehrere Hohlleiter sich jeweils zu einem gemeinsamen Hohlleiter vereinen.

Die mehreren Hohlleiteranordnungen sind beispielsweise gleich oder vorzugsweise unterschiedlich gebildet.

Gemäß der Erfindung sind zumindest einige der mehreren Bereiche als zueinander winklig angeordnete Ebenen gebildet. Dadurch wird insbesondere der technische Vorteil bewirkt, dass ein Abstrahlbereich von > 180° erreicht werden kann. Vorzugsweise weist eine Ebene ausschließlich einen Bereich auf. Insbesondere weist eine Ebene mehrere Bereiche auf. Vorzugsweise sind die Ebenen gleich oder beispielsweise unterschiedlich gebildet. Eine Ebene kann also beispielsweise mehrere Bereiche aufweisen, wobei eine andere Ebene ausschließlich einen Bereich aufweist.

In einer Ausführungsform weist die Oberfläche eine Krümmung auf, insbesondere weist zumindest einer der Bereiche eine Krümmung auf. Die Krümmung kann beispielsweise einer Kugelform entsprechen.

In einer weiteren Ausführungsform ist die Erzeugungseinrichtung ausgebildet, in den Eingängen elektromagnetische Wellen mit jeweils unterschiedlichen Frequenzen und/oder Intensitäten einzuspeisen. Dadurch wird insbesondere der technische Vorteil bewirkt, dass unterschiedliche Antennenkeulen erzeugt werden können. Somit kann je nach Bereich eine unterschiedliche Funktion bewirkt werden. Bei diesen Funktionen kann es sich beispielsweise um eine der vorstehend genannten Funktionen handeln.

Nach einer anderen Ausführungsform weisen die Hohlleiteranordnungen zumindest paarweise unterschiedliche Übertragungs- und/oder Auskoppelcharakteristiken für elektromagnetische Wellen auf.

Dadurch wird insbesondere der technische Effekt oder Vorteil bewirkt, dass jeder der Bereiche unterschiedliche Antennenkeulen erzeugen kann, sodass unterschiedliche Funktionen realisiert werden können.

Die unterschiedlichen Übertragungs- und/oder Auskoppelcharakteristiken können insbesondere durch unterschiedliche Dimensionen der Hohlleiteranordnungen bewirkt werden. Beispielsweise kann eine Breite und/oder eine Höhe der einzelnen Hohlleiter entsprechend der gewünschten zu übertragenden elektromagnetischen Welle gewählt werden.

Nach einer Ausführungsform ist zumindest einer der Hohlleiter, insbesondere alle Hohlleiter, ein Rechteckhohlleiter.

In einer weiteren Ausführungsform ist eine Erfassungseinrichtung zum Erfassen von elektromagnetischen Wellen vorgesehen, die mit dem jeweiligen Eingang der mehreren Hohlleiteranordnungen verbunden ist, so dass bei einer Einspeisung von elektromagnetischen Wellen in die mit dem jeweiligen Eingang verbundenen Öffnungen und einer Übertragung dieser eingespeisten elektromagnetischen Wellen mittels der jeweiligen Hohlleiteranordnung zu dem Eingang die dort ausgekoppelte elektromagnetischen Wellen mittels der Erfassungseinrichtung erfassbar sind.

Dadurch wird insbesondere der technische Vorteil bewirkt, dass die Antennenvorrichtung nun auch als Empfänger und nicht nur als Sender wirken kann. Die Erfassungseinrichtung ist also vorzugsweise bei mehreren Eingängen, also bei mehreren Hohlleiteranordnungen, entsprechend ausgebildet, die dort jeweils ausgekoppelten elektromagnetischen Wellen zu erfassen. Dadurch ist beispielsweise der technische Effekt oder Vorteil bewirkt, dass eine Ortung möglich ist, von welchem Bereich welche elektromagnetischen Wellen kommen.

Bei einer Einkopplung von elektromagnetischen Wellen in die Öffnungen bilden diese also Eingänge (oder wirken als Eingänge oder funktionieren als Eingang) für die elektromagnetische Wellen in die jeweilige Hohlleiteranordnung. Die Eingänge der Hohlleiteranordnungen bilden für die in die Öffnungen eingespeisten oder eingekoppelten elektromagnetischen Wellen Ausgänge (die Eingänge wirken als Ausgänge oder funktionieren als Ausgänge), aus welchen die elektromagnetischen Wellen auskoppeln oder abstrahlen. Es ist also ein bidirektionaler Transport oder eine bidirektionale Übertragung von elektromagnetischen Wellen in den Hohlleiteranordnungen möglich.

Jeder der Bereiche wirkt als ein eigener Sensor oder bildet einen solchen. So bildet jeder der Bereiche bei Radarwellen einen Radarsensor oder wirkt als ein solcher. Die Bereiche können somit allgemein als Sensoren, beispielsweise als Radarsensoren (bei Verwendung und/oder Erfassung von Radarwellen), bezeichnet werden.

Nach einer anderen Ausführungsform sind die Öffnungen spalten- und/oder zeilenweise angeordnet. Das heißt also insbesondere, dass die Öffnungen analog zu einer Tabelle oder einer Matrix in Spalten und Zeilen oder lediglich in einer Spalte oder lediglich in einer Zeile angeordnet sind. Dadurch wird beispielsweise der technische Vorteil bewirkt, dass die Öffnungen in der Oberfläche einfach herzustellen sind. Durch die Regelmäßigkeit wird eine einfache Berechnung der Antennenkeule ermöglicht. Umgekehrt kann bei gewünschter Antennenkeule mittels entsprechender spalten- und/oder zeilenweiser Anordnung diese real umgesetzt werden.

Nach einer weiteren Ausführungsform ist die Oberfläche Teil einer Gehäuseaußenoberfläche eines die Erzeugungseinrichtung aufnehmenden Gehäuses. Dadurch wird beispielsweise der technische Vorteil bewirkt, dass das Gehäuse die Erzeugungseinrichtung schützen kann. Das Gehäuse weist in vorteilhafter Weise eine Doppelfunktion auf: Schutz und Abstrahlen.

Nach einer Ausführungsform ist die Erfassungseinrichtung ebenfalls im Gehäuse aufgenommen. Die Vorteile gelten analog.

Nach einer Ausführungsform sind die Hohlleiteranordnungen in einer Wandung des Gehäuses verlaufend gebildet. Dadurch wird beispielsweise der technische Vorteil bewirkt, dass die Hohlleiteranordnungen geschützt in der Wandung sind. Ferner ist ein Platz sparender Einbau bewirkt.

Nach einer anderen Ausführungsform ist der jeweilige Eingang an einer der Erzeugungseinrichtung zugewandten Innenoberfläche der Wandung gebildet. Dadurch wird beispielsweise der technische Vorteil bewirkt, dass die Erzeugungseinrichtung und der jeweilige Eingang nahe beieinander liegen, was ein einfaches Einkoppeln bewirken kann.

Nach einer Ausführungsform ist eine Leiterkarte (oder auch Leiterplatte genannt) vorgesehen, auf der die Erzeugungseinrichtung und/oder die Erfassungseinrichtung angeordnet sind. Dadurch wird beispielsweise der technische Vorteil bewirkt, dass eine elektrische Kontaktierung der Erzeugungseinrichtung und der Erfassungseinrichtung einfach bewirkt werden kann.

Nach einer Ausführungsform ist die Erzeugungseinrichtung gleichzeitig als Erfassungseinrichtung ausgebildet und umgekehrt. Das heißt also insbesondere, dass eine Erfassungs-/Erzeugungseinrichtung vorgesehen ist, die beide Funktionalitäten bewirkt: Erzeugen von elektromagnetischen Wellen und Empfangen oder Erfassen von elektromagnetischen Wellen. Eine solche Einrichtung kann beispielsweise als Sendeempfänger, auf Englisch "Transceiver", bezeichnet werden. Bei Radarwellen kann eine solche Einrichtung beispielsweise als ein Radarsendeempfänger bezeichnet werden.

In einer Ausführungsform ist die Antennenvorrichtung derart im Fahrzeug eingebaut oder angeordnet, dass zumindest einer der Bereich der Fahrbahn zugewandt ist, also insbesondere in Richtung Fahrbahn blickt oder schaut. Die von diesem Bereich abgestrahlten elektromagnetischen Wellen werden also von der Fahrbahn reflektiert, so dass die reflektierten elektromagnetischen Wellen erfasst werden können. Da die Fahrbahn als zu detektierendes Testobjekt stets vorhanden ist, kann in vorteilhafter Weise eine Dejustage- und/oder Blindheitserkennung durchgeführt werden, wie weiter unten im Zusammenhang mit dem Ausführungsbeispiel der Figuren näher erläutert. Die dortigen Ausführungen gelten allgemein auch losgelöst von dem dort beschriebenen Ausführungsbeispiel.

Die Erfindung wird im Folgenden anhand von bevorzugten Ausführungsbeispielen näher erläutert. Hierbei zeigen
Fig. 1 ein Gehäuse einer Antennenvorrichtung,
Fig. 2 eine schräge Draufsicht auf eine Innenoberfläche einer Wandung des Gehäuses der Fig. 1,
Fig. 3 die Innenoberfläche gemäß Fig. 2 mit einer eingebrachten Leiterkarte,
Fig. 4 ein Fahrzeug mit einer Antennenvorrichtung.

Im Folgenden können für gleiche Merkmale gleiche Bezugszeichen verwendet werden.

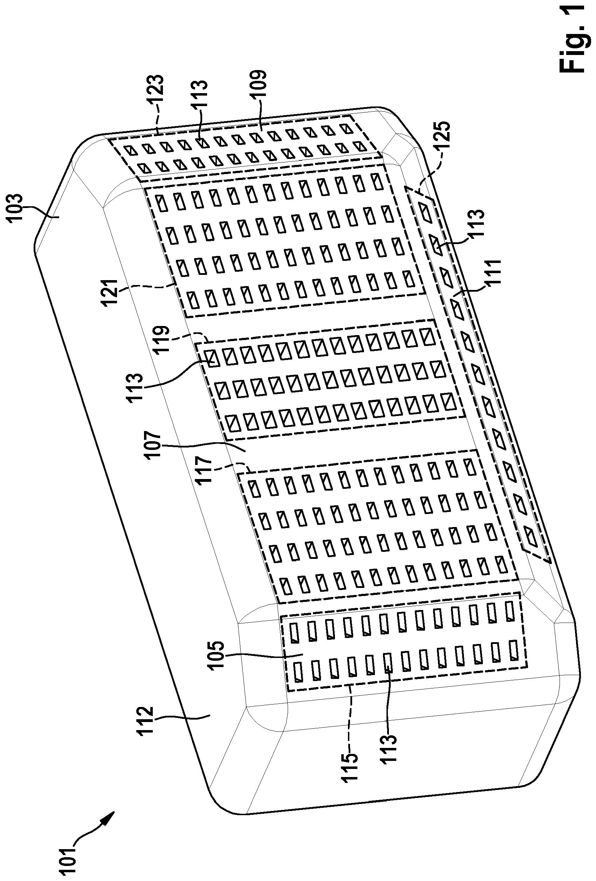

Fig. 1 zeigt eine Antennenvorrichtung 101 für ein Fahrzeug (nicht gezeigt). Die Antennenvorrichtung 101 umfasst als Bauteil ein Gehäuse 103, welches als neunflächiger Polyeder gebildet ist. In anderen nicht gezeigten Ausführungsformen sind andere Gehäuseformen vorgesehen. Die neunflächige Polyederform ist daher beispielhaft und nicht einschränkend. Einige Flächen des Gehäuses 103 sind mit dem Bezugszeichen 105, 107, 109 und 111 gekennzeichnet. Diese Flächen sind Teile einer Gehäuseaußenoberfläche 112 des Gehäuses 103. Die Flächen 105, 107, 109 und 111 sind winklig zueinander gebildet, wobei jede Fläche eben ist. Jede der Flächen 105, 107, 109, 111 weist mehrere Öffnungen 113 auf. Die Öffnungen 113 der Flächen 105, 107 und 109 sind jeweils spalten- und zeilenweise gebildet oder angeordnet. Die Öffnungen 113 der Fläche 111 sind ausschließlich zeilenweise angeordnet. Diese Öffnungen bilden also eine Zeile.

Das Bezugszeichen 115 kennzeichnet einen Bereich, der die Öffnungen 113 der Fläche 105 umfasst. Die Bezugszeichen 117, 119 und 121 kennzeichnen analog zu dem Bezugszeichen 115 jeweils drei Bereiche der Fläche 107, die jeweils mehrere Öffnungen 113 umfassen. Das Bezugszeichen 123 kennzeichnet analog zu dem Bezugszeichen 115 einen Bereich, der die Öffnungen 113 der Fläche 109 umfasst. Analog kennzeichnet das Bezugszeichen 125 einen Bereich, der die Öffnungen 113 der Fläche 111 umfasst.

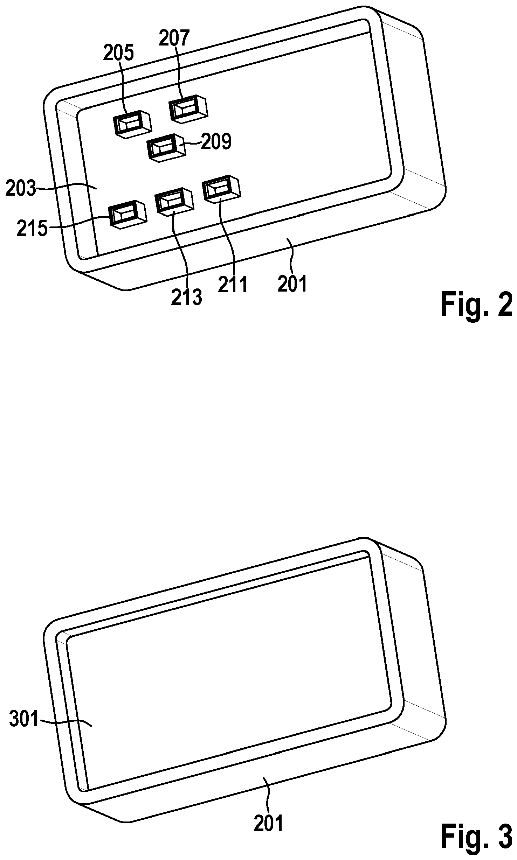

Fig. 2 zeigt eine Wandung 201 mit einer Innenoberfläche 203 des Gehäuses 103, wobei die zu der Innenoberfläche 203 zugehörige Gehäuseaußenfläche die Fläche 107 ist. An der Wandung 203 sind mehrere Eingänge 205, 207, 209, 211, 213 und 215 gebildet, die jeweils Eingänge einer eigenen Hohlleiteranordnung sind. Die Hohlleiteranordnungen selbst sind nicht gezeigt, da sie in der Wandung 201 integriert oder eingebaut sind. Das heißt, dass die Hohlleiteranordnungen in der Wandung 201 verlaufen. Die Eingänge 205, 207, 209, 211, 213 und 215 stehen also mit den Öffnungen 113 über die Hohlleiter der Hohlleiteranordnungen in Verbindung. Bei einer Einkopplung von elektromagnetischen Wellen, insbesondere von Radarwellen, in die Eingänge 205, 207, 209, 211, 213 und 215 werden die eingekoppelten elektromagnetischen Wellen zu den Öffnungen 113 übertragen und von diesen aus weg vom Gehäuse 103 abgestrahlt.

Die hier nicht gezeigten Hohlleiteranordnungen bilden also ein Hohlleitersystem zum Übertragen von elektromagnetischen Wellen.

Hierbei steht der Eingang 205 mit den Öffnungen 113 des Bereichs 121 in Verbindung. Der Eingang 207 steht mit den Öffnungen 113 des Bereichs 117 in Verbindung. Der Eingang 209 steht mit den Öffnungen 113 des Bereichs 119 in Verbindung. Der Eingang 211 steht mit den Öffnungen 113 des Bereichs 115 in Verbindung. Der Eingang 213 steht mit den Öffnungen 113 des Bereichs 125 in Verbindung. Der Eingang 215 steht mit den Öffnungen 113 des Bereichs 123 in Verbindung.

Gemäß Fig. 3 ist eine Leiterkarte 301 in das Gehäuse 103 eingebracht. Die Leiterkarte 301 weist auf ihrer der Innenoberfläche 203 der Wandung 201 zugewandten und daher nicht sichtbaren Seite mehrere Sendeempfänger, vorzugsweise Radarsendeempfänger, auf, die entsprechend der Anordnung der Eingänge 205, 207, 209, 211, 213 und 215 angeordnet sind. Somit ist jedem der Eingänge 205, 207, 209, 211, 213 und 215 ein eigener Sendeempfänger gegenüberliegend angeordnet. Diese Sendeempfänger bilden also eine Erzeugungs-/Erfassungseinrichtung für elektromagnetische Wellen. Somit können beispielsweise elektromagnetische Wellen, die durch die Öffnungen 113 des Bereichs 117 eingekoppelt werden, von der entsprechenden Hohlleiteranordnung zum zugehörigen Eingang 207 übertragen werden und dort mittels des entsprechenden Sendeempfängers erfasst oder empfangen werden. Entsprechendes gilt für die anderen Öffnungen 113 und die anderen Eingänge 207, 209, 211, 213 und 215. Umgekehrt können in die Eingänge 205, 207, 209, 211, 213 und 215 elektromagnetische Wellen eingespeist werden, die durch die Öffnungen 113 der entsprechenden Bereiche abgestrahlt werden. Jeder der Bereiche 115, 117, 119, 121, 123 und 125 bildet also eine Antenne mit eigener Antennenkeule.

Dies soll wie folgt weiter beschrieben werden:
Ausgehend von einer oder mehreren Hochfrequenzquellen (den Sendern der Sendeempfänger) werden elektromagnetische Wellen (Signale) in das Hohlleitersystem eingespeist. Das Hohlleitersystem verteilt, transportiert die Signale (elektromagnetische Wellen) Amplituden- und Phasenstabil, zu einer durch die Öffnungen abstrahlenden Oberfläche. Amplitude und Phase der einzelnen Hohlleiterzweige sind vorzugsweise genau nach gewünschter Antennencharakteristik oder Antennekeule berechnet. Mehrere dieser durch die Öffnungen abstrahlenden Hohlleiter kombinieren sich zu einer vorbestimmten Antennencharakteristik. Die abstrahlende Oberfläche (einhüllende) kann jede Form annehmen.

Der Empfangsweg funktioniert in umgekehrter Richtung nach dem gleichem Prinzip.

Abhängig vom Aufbau der Sende- und Empfangsseite ist eine separate oder simultane Nutzung mehrerer Funktionen/Antennen möglich. Jeder der Bereiche mit den Öffnungen 113 bildet eine eigenständige Antenne, die für eine eigenständige Funktion eingerichtet ist.

Der theoretische maximale Abstrahlwinkel von 180° ebener Antennensysteme wird durch fast beliebig gekrümmte Oberflächen überwunden. Als extremes Beispiel kann in einer Ausführungsform ein kugelförmiger Strahler vorgesehen sein. Als Basis dazu dienen Hohlleiterstrukturen mit Öffnungen, die durch geeignete Zusammenschaltung als skalierbare Antenne wirken.

Durch Platzierung von mindestens zwei oder mehr Antennengruppen oder Antennenanordnungen (also die Bereiche) können mehrere Funktionen in einem Sensor realisiert werden (Front-Funktionen: Nah-, Mittel- und Fernbereichsradar, zusammen mit Seiten-Funktionen: Einparkhilfe, Parklückenvermessung, Fußgängerschutz und Spurwechselassistent. Funktionen und Funktions-Kombinatoriken sind ebenfalls für Heck/Seiten-Funktionen realisierbar.

Durch die flexible Formgebung des Abstrahlbereiches/Antenne kann eine Anpassung an die Kontur der Einbauposition erreicht werden. Vorteilhaft wirkt hier insbesondere eine geometrisch nähere Anbindung an die erste/nächste zu durchdringende Ebene (zum Beispiel Stoßfänger). Damit lassen sich unerwünschte Reflexionen zwischen Abstrahlbereich/Antenne und Karosserieteilen minimieren. Ebenfalls können durch unmittelbare Anbringung - an die erste/nächste zu durchdringende Ebene - die Verzerrungen der Antennencharakteristiken minimiert werden. Auch durch die Formgebung des Abstrahlbereiches/Antenne und auch durch das Antennendesign (SignalVerteilung, Amplituden- und Phasenbelegung bezogen auf die Belegung der Abstrahlfläche.

Sensoren ohne automatische Justierung können in vorteilhafter Weise durch einen zusätzlichen Radarstrahl (auf Englisch: Beam) (oder allgemein mit elektromagnetischer Strahlung beliebiger Wellenlängen) mit einer DejustageErkennung ausgestattet werden. Die wird wie folgt näher erläutert:

### Dejustage:

Betrifft ungewollte Elevationsänderungen der Abstrahlrichtungen einer Oberfläche oder der Bereiche der Oberfläche. Zum Beispiel durch Veränderung der Einbauposition durch leichte Havarien des Fahrzeugs oder durch unsachgemäße Reparaturarbeiten am Fahrzeug.

Ein beispielhaftes Messverfahren für die Dejustageerkennung ist eine Laufzeit- und/oder Abstandsmessung von der abstrahlenden Oberfläche oder vom abstrahlenden Bereich der Oberfläche zur Fahrbahnoberfläche. Für eine bestimmte Einbauposition ergibt sich eine bestimmte Entfernung zwischen abstrahlender Oberfläche oder abstrahlenden Bereich und Fahrbahn; ändert sich die Einbauposition ergibt eine Messung eine geänderte Entfernung zur Fahrbahnoberfläche. Durch Vergleich mit vordefinierten Toleranzgrenzen lassen sich so funktionale Überwachungen realisieren.

Auch Blindheitserkennungen können hiermit aufgesetzt werden. Die wird wie folgt näher erläutert:

### Blindheitserkennung:

Vom Aufbau ähnlich wie Dejustageerkennung, aber hier wird - beispielhaft - der Pegel des, von der Fahrbahn, rückgestreuten Signals ausgewertet. Wird kein, oder nur ein sehr geringer Pegel empfangen, kann dies als Blindheit des Sensors (der Oberfläche oder des Bereichs der Oberfläche) gedeutet werden. Beispiele dafür: Schneematsch auf der Oberfläche oder zumindest auf einem Bereich.

Funktional ist dies eine wichtige Überwachungseinrichtung, da im Blindheitsfall einem Führer des Fahrzeugs eine Fehlfunktion mitgeteilt werden muss.

Beide obigen Funktionen, in der beschriebenen, oder ähnlichen Ausführung, können auch dazu verwendet werden, um eine Eigendiagnose des Sensors auszuführen.

Durch die gewählte Form der Oberfläche kann beispielsweise sichergestellt werden, dass bei einer bestimmten Einbauposition in einem Fahrzeug stets eine Oberfläche mit Öffnungen in Richtung Fahrbahn blickt oder schaut oder der Fahrbahn zugewandt ist. Die elektromagnetischen Wellen, die somit in Richtung Fahrbahn ausgestrahlt werden, müssten im Normalfall von dieser reflektiert und dann wieder erfasst werden können, wenn die abstrahlende Oberfläche frei von Schneematsch oder ähnlichen Verschmutzungen wäre und/oder wenn sich die ursprüngliche Einbauposition nicht geändert hat. Es müsste also auf jeden Fall ein Signal erfasst werden können. Denn die Fahrbahn ist stets als ein zu detektierendes Testobjekt vorhanden. Wenn keine Fahrbahn detektiert würde, ist dies ein Zeichen dafür, dass sich die Einbauposition geändert hat und/oder die Oberfläche verschmutzt ist. Im konkreten Ausführungsbeispiel kann dieser Test beispielsweise mittels des Bereichs 125 durchgeführt werden.

Die Vorteile der Erfindung kommen vor allem beim Einbau an Eckpositionen eines Fahrzeugs zu tragen, da hier der theoretische Abstrahlwinkel - aus Karosserie-Sicht - bis zu 270° beträgt.

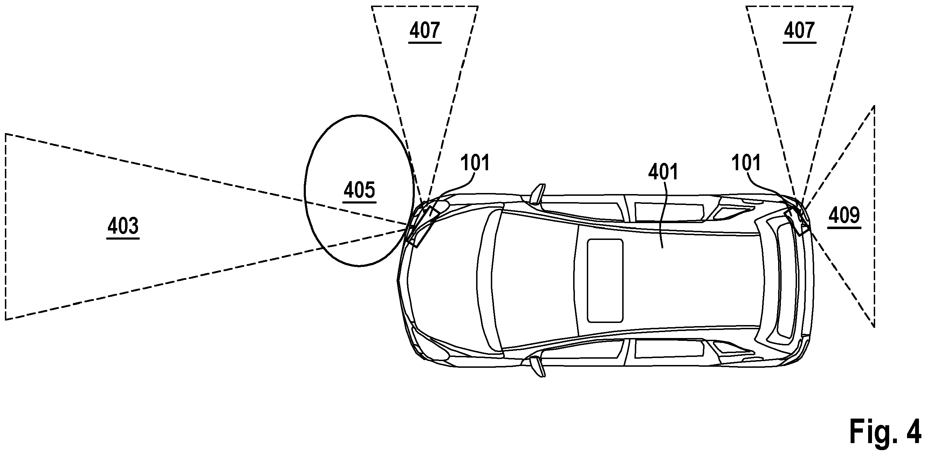

Fig. 4 zeigt ein Fahrzeug 401 umfassend mehrere Antennenvorrichtungen 101, wobei in Fig. 4 explizit nur zwei Antennenvorrichtungen 101 gezeigt sind. Eine der beiden Antennenvorrichtungen 101 befindet sich in Fahrtrichtung rechts im vorderen Scheinwerfer-/Stoßfängerbereich. Die andere Antennenvorrichtung 101 befindet sich in Fahrtrichtung hinten im Bereich des rechten Scheinwerfers. Die Bezugszeichen 403, 405, 407 und 409 zeigen auf lediglich schematisch dargestellte Abstrahlcharakteristiken oder Antennenkeulen der entsprechenden Antennen (also die Bereiche 115, 117, 119, 121, 123 und 125) der Antennenvorrichtung 101. Schematisch deshalb, da hier Dreiecke eingezeichnet sind, die aber keiner realen Antennenkeule entsprechen können. Es soll damit lediglich durch die unterschiedlichen Dreiecke symbolisiert sein, dass die einzelnen Antennenkeulen der Bereiche 115, 117, 119, 121, 123 und 125 unterschiedlich sind.

Zusammenfassend umfasst die Erfindung also insbesondere den Gedanken, eine Vielebenenantenne bereitzustellen, wobei mehrere winklig zu einander angeordnete Ebenen vorgesehen sind, die mit einer eigenen Abstrahlcharakteristik elektromagnetische Wellen abstrahlen, sodass unterschiedliche Funktionen bereitgestellt werden können.

## Patentansprüche

1. Antennenvorrichtung (101) für ein Fahrzeug (401), aufweisend:
- eine Erzeugungseinrichtung zum Erzeugen elektromagnetischer Wellen,
- ein Hohlleitersystem zum Übertragen von elektromagnetischen Wellen, wobei
- das Hohlleitersystem mehrere Hohlleiteranordnungen umfasst, wobei
- die Hohlleiteranordnungen jeweils einen Eingang (205, 207, 209, 211, 213, 215) zum Einspeisen der erzeugten elektromagnetischen Wellen aufweisen, wobei
- die Hohlleiteranordnungen jeweils mehrere mit dem jeweiligen Eingang (205, 207, 209, 211, 213, 215) verbundene Ausgänge zum Auskoppeln der in den jeweiligen Eingang (205, 207, 209, 211, 213, 215) eingespeisten elektromagnetischen Wellen aufweisen,
- wobei die jeweiligen mehreren Ausgänge mit Öffnungen (113) in einer Oberfläche verbunden sind, aus welchen die elektromagnetischen Wellen abstrahlen können,
- so dass die Oberfläche mehrere Bereiche (105, 107, 109, 111) aufweist, dessen jeweilige Öffnungen (113) mittels einer eigenen Hohlleiteranordnung mit einem eigenen Eingang (205, 207, 209, 211, 213, 215) verbunden sind, **dadurch gekennzeichnet, dass**
- zumindest einige der mehreren Bereiche (105, 107, 109, 111) als zueinander winklig angeordnete Ebenen gebildet sind.

2. Antennenvorrichtung (101) nach Anspruch 1, wobei die Erzeugungseinrichtung ausgebildet ist, in den Eingängen (205, 207, 209, 211, 213, 215) elektromagnetische Wellen mit jeweils unterschiedlichen Frequenzen und/oder Intensitäten einzuspeisen.

3. Antennenvorrichtung (101) nach einem der vorherigen Ansprüche , wobei die Hohlleiteranordnungen zumindest paarweise unterschiedliche Übertragungs- und/oder Auskoppelcharakteristiken für elektromagnetische Wellen aufweisen.

4. Antennenvorrichtung (101) nach einem der vorherigen Ansprüche, wobei eine Erfassungseinrichtung zum Erfassen von elektromagnetischen Wellen vorgesehen ist, die mit dem jeweiligen Eingang (205, 207, 209, 211, 213, 215) der mehreren Hohlleiteranordnungen verbunden ist, so dass bei einer Einspeisung von elektromagnetischen Wellen in die mit dem jeweiligen Eingang (205, 207, 209, 211, 213, 215) verbundenen Öffnungen (113) und einer Übertragung dieser eingespeisten elektromagnetischen Wellen mittels der jeweiligen Hohlleiteranordnung zu dem jeweiligen Eingang (205, 207, 209, 211, 213, 215) die dort ausgekoppelte elektromagnetischen Wellen mittels der Erfassungseinrichtung erfassbar sind.

5. Antennenvorrichtung (101) nach einem der vorherigen Ansprüche, wobei die Öffnungen (113) spalten- und/oder zeilenweise angeordnet sind.

6. Antennenvorrichtung (101) nach einem der vorherigen Ansprüche, wobei die Oberfläche Teil einer Gehäuseaußenoberfläche (112) eines die Erzeugungseinrichtung aufnehmendes Gehäuses (103) ist.

7. Antennenvorrichtung (101) nach Anspruch 6, wobei die Hohlleiteranordnungen in einer Wandung (201) des Gehäuses (103) verlaufend gebildet sind.

8. Antennenvorrichtung (101) nach Anspruch 7, wobei der jeweilige Eingang (205, 207, 209, 211, 213, 215) an einer der Erzeugungseinrichtung zugewandten Innenoberfläche (203) der Wandung (201) gebildet ist.

## Claims

1. Antenna device (101) for a vehicle (401), comprising:
- a generating unit for generating electromagnetic waves,
- a waveguide system for transmitting electromagnetic waves, wherein
- the waveguide system comprises a plurality of waveguide arrangements, wherein
- the waveguide arrangements each comprise an input (205, 207, 209, 211, 213, 215) for feeding in the electromagnetic waves generated, wherein
- the waveguide arrangements each comprise a plurality of outputs connected to the respective input (205, 207, 209, 211, 213, 215) and serving for coupling out the electromagnetic waves fed into the respective input (205, 207, 209, 211, 213, 215),
- wherein the respective plurality of outputs are connected to openings (113) in a surface, from which openings the electromagnetic waves can radiate,
- such that the surface comprises a plurality of regions (105, 107, 109, 111), the respective openings (113) of which are connected to a dedicated input (205, 207, 209, 211, 213, 215) by means of a dedicated waveguide arrangement, **characterized in that**
- at least some of the plurality of regions (105, 107, 109, 111) are formed as planes arranged angularly with respect to one another.

2. Antenna device (101) according to Claim 1, wherein the generating unit is configured to feed electromagnetic waves having in each case different frequencies and/or intensities into the inputs (205, 207, 209, 211, 213, 215).

3. Antenna device (101) according to either of the preceding claims, wherein the waveguide arrangements have at least in pairs different transmission and/or coupling-out characteristics for electromagnetic waves.

4. Antenna device (101) according to any of the preceding claims, wherein a detecting unit for detecting electromagnetic waves is provided, which is connected to the respective input (205, 207, 209, 211, 213, 215) of the plurality of waveguide arrangements, such that in the event of electromagnetic waves being fed into the openings (113) connected to the respective input (205, 207, 209, 211, 213, 215) and in the event of said electromagnetic waves fed in being transmitted by means of the respective waveguide arrangement to the respective input (205, 207, 209, 211, 213, 215), the electromagnetic waves coupled out there are detectable by means of the detecting unit.

5. Antenna device (101) according to any of the preceding claims, wherein the openings (113) are arranged in columns and/or in rows.

6. Antenna device (101) according to any of the preceding claims, wherein the surface is part of a housing outer surface (112) of a housing (103) accommodating the generating unit.

7. Antenna device (101) according to Claim 6, wherein the waveguide arrangements are formed in a manner running in a wall (201) of the housing (103).

8. Antenna device (101) according to Claim 7, wherein the respective input (205, 207, 209, 211, 213, 215) is formed at an inner surface (203) of the wall (201) facing the generating unit.

## Revendications

1. Dispositif d'antenne (101) pour un véhicule (401), comprenant :
- un dispositif de génération pour générer des ondes électromagnétiques,
- un système de guide d'ondes permettant de transmettre des ondes électromagnétiques, dans lequel
- le système de guide d'ondes comprend plusieurs ensembles de guides d'ondes, dans lequel
- les ensembles de guides d'ondes présentent respectivement une entrée (205, 207, 209, 211, 213, 215) pour injecter les ondes électromagnétiques générées, dans lequel
- les ensembles de guide d'ondes présentent respectivement plusieurs sorties reliées à l'entrée respective (205, 207, 209, 211, 213, 215) pour découpler les ondes électromagnétiques injectées à l'entrée respective (205, 207, 209, 211, 213, 215),
- les plusieurs sorties respectives étant reliées à des orifices (113) dans une surface, à partir desquelles les ondes électromagnétiques peuvent rayonner,
- de sorte que la surface présente plusieurs zones (105, 107, 109, 111) dont les orifices respectifs (113) sont reliés au moyen d'un ensemble de guides d'ondes propre à une entrée propre (205, 207, 209, 211, 213, 215), **caractérisé en ce que**
- au moins certaines des plusieurs zones (105, 107, 109, 111) sont formées sous forme de plans disposés à un angle les uns par rapport aux autres.

2. Dispositif d'antenne (101) selon la revendication 1, dans lequel le dispositif de génération est réalisé pour injecter aux entrées (205, 207, 209, 211, 213, 215) des ondes électromagnétiques ayant des fréquences et/ou intensités différentes, respectivement.

3. Dispositif d'antenne (101) selon l'une quelconque des revendications précédentes, dans lequel les ensembles de guides d'onde présentent au moins par paires des caractéristiques de transmission et/ou de découplage mutuellement différentes pour des ondes électromagnétiques.

4. Dispositif d'antenne (101) selon l'une quelconque des revendications précédentes, dans lequel un dispositif de détection pour détecter des ondes électromagnétiques est prévu qui est relié à l'entrée respective (205, 207, 209, 211, 213, 215) des plusieurs ensembles de guides d'ondes de sorte qu'en cas d'injection d'ondes électromagnétiques au niveau des orifices (113) reliés à l'entrée respective (205, 207, 209, 211, 213, 215) et de transmission de ces ondes électromagnétiques injectées au moyen de l'ensemble de guides d'ondes respectif à l'entrée respective (205, 207, 209, 211, 213, 215), les ondes électromagnétiques qui y sont découplées peuvent être détectées au moyen du dispositif de détection.

5. Dispositif d'antenne (101) selon l'une quelconque des revendications précédentes, dans lequel les orifices (113) sont disposés en colonnes et/ou en rangées.

6. Dispositif d'antenne (101) selon l'une quelconque des revendications précédentes, dans lequel la surface fait partie d'une surface extérieure de boîtier (112) d'un boîtier (103) logeant le dispositif de génération.

7. Dispositif d'antenne (101) selon la revendication 6, dans lequel les ensembles de guides d'ondes sont formés en s'étendant dans une paroi (201) du boîtier (103).

8. Dispositif d'antenne (101) selon la revendication 7, dans lequel l'entrée respective (205, 207, 209, 211, 213, 215) est formée sur une surface intérieure (203) de la paroi (201), tournée vers le dispositif de génération.
